(19) Europäisches Patentamt
European Patent Office
Office européen des brevets

(11) EP 2 199 974 A1

(12) DEMANDE DE BREVET EUROPEEN

(43) Date de publication:
23.06.2010 Bulletin 2010/25

(51) Int Cl.:
*G06T 5/50* (2006.01)   *G06T 7/00* (2006.01)

(21) Numéro de dépôt: 09174226.2

(22) Date de dépôt: 27.10.2009

(84) Etats contractants désignés:
AT BE BG CH CY CZ DE DK EE ES FI FR GB GR
HR HU IE IS IT LI LT LU LV MC MK MT NL NO PL
PT RO SE SI SK SM TR

(30) Priorité: 09.12.2008 FR 0806901

(71) Demandeur: Thales
92200 Neuilly Sur Seine (FR)

(72) Inventeurs:
• Cazaux, Patrick
33290 LE PIAN MEDOC (FR)

• Espin De La Vega, Alexandre
33700 MERIGNAC (FR)
• Faye, Jean-Pierre
33160 ST MEDARD EN JALLES (FR)

(74) Mandataire: Bréda, Jean-Marc et al
Marks & Clerk France
Conseils en Propriété Industrielle
Immeuble " Visium "
22, avenue Aristide Briand
94117 Arcueil Cedex (FR)

(54) Dispositif de détection d'anomalies dans une image numérique

(57)     Le dispositif selon l'invention a pour objectif de faciliter la vérification de la conformité entre une image numérique attendue ou image de référence et une image numérique réellement obtenue. Le dispositif selon l'invention met en oeuvre une méthode permettant de distinguer de manière rapide et efficace les différences entre une image de référence et une image obtenue. Le dispositif selon l'invention comporte des moyens prenant en entrée les deux images, référence et obtenue, et produisant en sortie une seule image, résultant de la fusion des deux images d'entrée dans laquelle les parties communes aux deux images sont représentées en teintes de gris, les différences entre la première et la deuxième image étant représentées en vert ou en rouge selon leur appartenance à la première ou à la seconde image.

IMAGE RESULTANTE

FIG. 3

**Description**

Le domaine de l'invention est celui de la conception et de la réalisation d'images graphiques comportant des informations sous forme de symboles géométriques ou alphanumériques. Pour un certain nombre d'applications, les informations calculées et affichées sur des dispositifs de visualisation doivent être hautement fiables dans la mesure où elles fournissent des informations vitales sur les paramètres ou le bon fonctionnement d'un système. On citera, bien entendu, le domaine des transports et en particulier celui de l'aéronautique, mais également toutes industries demandant des contrôles sécurisés et fiables d'images graphiques. Les images affichées sont calculées à partir d'algorithmes et doivent correspondre à des spécifications très précises. Ces spécifications peuvent être identifiées dans des images de référence. Dans la suite du texte, on appellera image obtenue l'image calculée et image attendue l'image de référence.

Actuellement, la vérification d'une image est réalisée par un opérateur directement sur un écran présentant l'image obtenue. Il existe deux méthodes permettant de vérifier cette image.

Une première méthode consiste, pour l'opérateur, à comparer l'image obtenue à sa description textuelle. Par exemple, tel symbole X doit se trouver en haut de l'image. Dans ce cas, le texte décrivant les éléments à observer peut amener une interprétation particulière de la part de l'opérateur vérifiant le résultat. Par exemple, si l'opérateur doit vérifier que le symbole X est positionné en haut de l'écran, doit-il considérer que, si le symbole X est dans la moitié supérieure de l'écran, alors il est correctement placé, ou bien doit-il considérer que le symbole doit être exactement aligné sur la bordure haute de l'écran ?

Une seconde méthode consiste, pour éviter les erreurs d'interprétation précédentes, à réaliser l'image attendue sous forme graphique. Dans ce cas, il ne subsiste plus d'interprétation possible. L'image obtenue doit alors être strictement identique à l'image de référence. La comparaison des deux formats graphiques est, aujourd'hui, réalisée à l'oeil nu. Sur une image complexe, cette méthode peut être très fastidieuse. On connait tous le jeu des « sept erreurs » consistant à retrouver dans deux images quasiment identiques les sept différences qui les séparent. Les risques pour la personne en charge de la vérification sont de :

- passer énormément de temps à la recherche des différences entre deux images. Parfois, une différence d'un seul pixel n'est pas visible à l'oeil nu et peut être révélatrice d'un problème plus important ;
- ne pas voir toutes les différences entre les deux images et de s'arrêter aux premières différences identifiées.

Le dispositif selon l'invention a pour objectif de faciliter la vérification de la conformité entre une image attendue ou image de référence et une image réellement obtenue. Le dispositif selon l'invention met en oeuvre une méthode permettant de distinguer de manière rapide et efficace les différences entre une image de référence et une image obtenue. Le dispositif selon l'invention comporte un algorithme prenant en entrée les deux images, référence et obtenue, et produisant en sortie une seule image, résultant de la fusion des deux images d'entrée dans laquelle les différences entre la première et la deuxième image sont clairement identifiables.

Plus précisément, l'invention a pour objet un dispositif de détection d'anomalies dans une image numérique dite image obtenue O, ladite image comportant des symboles géométriques ou alphanumériques, ledit dispositif comportant des moyens de mémorisation de ladite image obtenue et d'une seconde image dite image attendue A et un dispositif de visualisation, les deux images étant composées de pixels colorés référencés dans un plan $\varphi(x, y)$, chaque pixel $P_O(x, y)$ de l'image obtenue ayant trois composantes rouge, verte et bleue notées respectivement $P_O(x, y, R)$, $P_O(x, y, G)$ et $P_O(x, y, B)$ et chaque pixel $P_A(x, y)$ de l'image attendue ayant également trois composantes rouge, verte et bleue notées respectivement $P_A(x, y, R)$, $P_A(x, y, G)$ et $P_A(x, y, B)$, pour tout pixel, la somme pondérée de ses trois composantes étant appelée luminance, les luminances étant notées $P_O(x, y, L)$ et $P_A(x, y, L)$,

**caractérisé en ce que** ledit dispositif comporte des moyens de comparaison des deux images obtenue et attendue, et des moyens de génération d'une troisième image dite image résultante, chaque pixel $P_R(x, y)$ de l'image résultante ayant trois composantes rouge, verte et bleue notées respectivement $P_R(x, y, R)$, $P_R(x, y, G)$ et $P_R(x, y, B)$ définies de la façon suivante :

Si les trois composantes d'un pixel $P_O(x, y)$ de l'image obtenue sont toutes identiques aux trois composantes du pixel $P_A(x, y)$ situé au même endroit de l'image attendue, alors les trois composantes du pixel $P_R(x, y)$ sont toutes égales et proportionnelles à la luminance $P_A(x, y, L)$ du pixel correspondant de l'image attendue ;

Si au moins une des trois composantes d'un pixel $P_O(x, y)$ de l'image obtenue est différente de la composante correspondante d'un pixel $P_A(x, y)$ situé au même endroit de l'image attendue, alors la composante rouge $P_R(x, y, R)$ du pixel $P_R(x, y)$ dépend de la luminance $P_O(x, y, L)$ du pixel correspondant de l'image obtenue, la composante verte $P_R(x, y, G)$ du pixel $P_R(x, y)$ dépend de la luminance $P_A(x, y, L)$ du pixel correspondant de l'image attendue, la composante bleue étant nulle.

Avantageusement, lorsque les trois composantes d'un pixel $P_O(x, y)$ de l'image obtenue sont toutes identiques aux trois composantes du pixel P$_A$(x, y), alors le facteur de proportionnalité est supérieur ou égal à 0 et inférieur à 1. Préférentiellement, lorsque, au moins une des trois composantes d'un pixel P$_O$(x, y) de l'image obtenue est différente de la composante correspondante d'un pixel P$_A$(x, y) situé au même endroit de l'image attendue, alors :

la composante rouge P$_R$(x, y, R) du pixel P$_R$(x, y) est proportionnelle à la luminance P$_O$(x, y, L) du pixel correspondant de l'image obtenue, le facteur de proportionnalité étant supérieur à 1 tant que la valeur de ladite composante reste inférieure à sa valeur maximale pMax, la composante rouge P$_R$(x, y, R) étant égale à sa valeur maximale pMax au-delà.

la composante verte P$_R$(x, y, G) du pixel P$_R$(x, y) est proportionnelle à la luminance P$_A$(x, y, L) du pixel correspondant de l'image attendue, le facteur de proportionnalité étant supérieur à 1 tant que la valeur de ladite composante reste inférieure à sa valeur maximale pMax, la composante verte P$_R$(x, y, R) étant égale à sa valeur maximale pMax au-delà.

L'invention sera mieux comprise et d'autres avantages apparaîtront à la lecture de la description qui va suivre donnée à titre non limitatif et grâce aux figures annexées parmi lesquelles :

La figure 1 représente le dispositif selon l'invention ;
La figure 2 représente un exemple d'image attendue et d'image obtenue ;
La figure 3 représente, pour les images attendue et obtenue de la figure 2, l'image résultant après traitement par le dispositif selon l'invention.

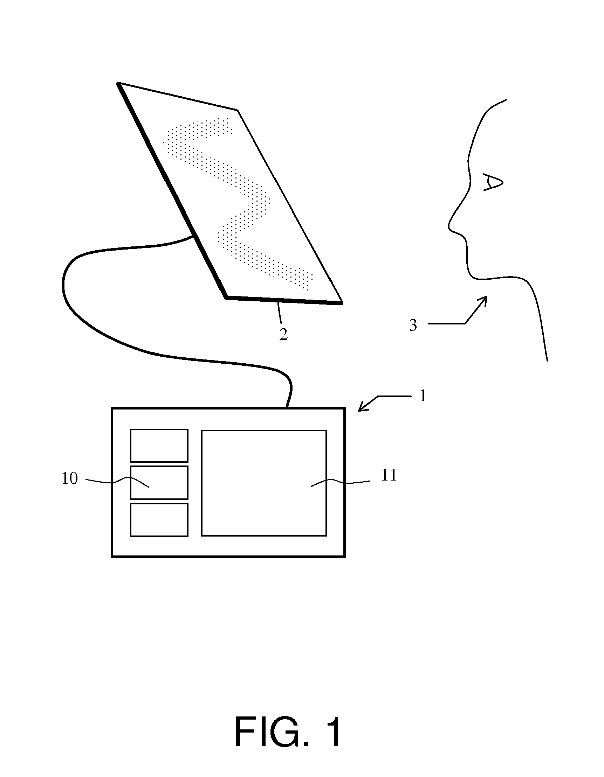

La figure 1 représente un dispositif selon l'invention. Il comprend essentiellement un calculateur 1 comprenant des moyens de mémorisation d'images numériques 10, des moyens de traitement simples des dites images permettant de réaliser, sur les composantes de leurs pixels, des fonctions logiques et des fonctions mathématiques élémentaires (addition et multiplication), des moyens de génération d'une image numérique 11 et un dispositif de visualisation 2 disposé devant un contrôleur humain 3.

On sait que les images numériques sont composées de pixels colorés P que l'on peut référencer dans un plan φ(x, y), chaque pixel P(x, y) d'une image ayant trois composantes rouge, verte et bleue notées respectivement P(x, y, R), P(x, y, G) et P(x, y, B). Il est bien entendu que le dispositif selon l'invention peut s'adapter, sans difficultés majeures, à des pixels ayant trois composantes de couleur différente, par exemple, rouge, jaune et bleue. Il peut également s'adapter sans difficultés majeures à des pixels ayant plus de trois composantes, par exemple, deux composantes vertes, une composante rouge et une composante bleue.

Le dispositif selon l'invention consiste à réaliser une comparaison pixel par pixel, composante par composante, entre les deux images attendue et obtenue de même taille et de même format de pixel. Le dispositif produit une image résultante de la comparaison identifiant l'ensemble des pixels identiques ou différents avec des couleurs différentes selon leur origine.

Lors de la comparaison d'un pixel P$_O$(x, y) de l'image obtenue et d'un pixel P$_A$(x, y) de l'image attendue, si les trois composantes des pixels sont identiques, l'algorithme du dispositif calcule la moyenne des trois composantes de couleur encore appelée luminance P$_A$(x, y, L) et affecte cette valeur à chacune des composantes du pixel résultat P$_R$(x, y). Ainsi

$$P_O(x, y, L) = (P_O(x, y, R) + P_O(x, y, G) + P_O(x, y, B))/3$$

$$P_A(x, y, L) = (P_A(x, y, R) + P_A(x, y, G) + P_A(x, y, B))/3$$

Ce pixel a donc une teinte de gris. La luminance globale du pixel résultat P$_R$(x, y) est ensuite diminuée par un coefficient multiplicateur noté fD inférieur à un sur les trois composantes de couleurs. On a alors :

$$P_R(x, y, R) = P_R(x, y, G) = P_R(x, y, B) = P_A(x, y, L) * fD$$

L'objectif de cette diminution de luminance est d'assombrir tous les pixels identiques afin d'augmenter le contraste avec des pixels de couleur, et cela même si les pixels identiques sont très clairs ou blancs. Au final, à l'issue d'une comparaison de deux pixels identiques, les trois composantes de couleurs du pixel produit P$_R$(x, y) sont toujours identiques. Sa couleur est donc toujours le noir ou des teintes de gris. On peut même envisager que fD soit nul de façon que seules les parties différentes colorées des deux images apparaissent dans l'image résultante. Cependant, il devient alors plus difficile à l'opérateur de déterminer et de situer le défaut.

Lors de la comparaison des pixels $P_O(x, y)$ et $P_A(x, y)$, s'il y a une différence sur une ou plusieurs des trois composantes de couleur, la composante verte $P_R(x, y, G)$ du pixel $P_R(x, y)$ de l'image résultante est proportionnelle à la luminance du pixel venant de l'image attendue ou de référence et la composante rouge $P_R(x, y, R)$ du pixel $P_R(x, y)$ de l'image résultante est proportionnelle à la luminance du pixel venant de l'image obtenue.

Les moyens de calcul du dispositif réalisent donc, dans ce dernier cas, les opérations suivantes :

-   calcul de la luminance $P_A(x, y, L)$ du pixel $P_A(x, y)$ issu de l'image attendue, $P_A(x, y, L)$ étant égale à la moyenne des trois composantes $P_A(x, y, R)$, $P_A(x, y, G)$ et $P_A(x, y, B)$ du pixel $P_A(x, y)$ ;
-   calcul de la luminance $P_O(x, y, L)$ du pixel $P_O(x, y)$ issu de l'image obtenue, $P_O(x, y, L)$ étant égale à la moyenne des trois composantes $Po(x, y, R)$, $Po(x, y, G)$ et $Po(x, y, B)$ du pixel $Po(x, y)$ ;
-   affectation de la luminance $P_A(x, y, L)$ du pixel $P_A(x, y)$ à la composante verte $P_R(x, y, G)$ du pixel $P_R(x, y)$,
-   affectation de la luminance $P_O(x, y, L)$ du pixel $P_O(x, y)$ à la composante rouge $P_R(x, y, R)$ du pixel $P_R(x, y)$ ;
-   Mise à zéro de la composante bleue $P_R(x, y, B)$ du pixel $P_R(x, y)$ ;
-   augmentation de la luminance du pixel $P_R(x, y)$ par un coefficient multiplicateur fR supérieur à 1 sur ses composantes verte et rouge. L'intérêt de ce ré-haussement est de bien augmenter le contraste des pixels de couleurs au milieu de pixels noirs ou gris, y compris si la couleur initiale est foncée. Bien entendu, si le coefficient multiplicateur doit produire des luminances supérieures à la valeur maximale possible pMax, on limite la valeur de la composante à cette valeur maximale.

On a alors

$$P_R(x, y, R) = MIN[\ P_O(x, y, L)*fR, pMax]$$

$$P_R(x, y, G) = MIN[\ P_A(x, y, L)*fR, pMax]$$

$$P_R(x, y, B) = 0$$

MIN (X,Y) étant un fonction logique établissant une comparaison entre deux valeurs X et Y, et ne retournant que la valeur la plus faible.

Sur l'image résultante ainsi générée, les seuls éléments qui apparaissent en couleurs sont les différences entre l'image référence et l'image obtenue. De plus, les éléments différents provenant de l'image de référence apparaissent en vert et les différences venant de l'image résultat apparaissent en rouge ; les zones de recouvrement apparaissant dans un ton jaune/orange issu du mélange entre le vert et le rouge. Le reste de l'image en niveau de gris permet de mieux se repérer par rapport aux images originales. Bien entendu, le choix des composantes verte et rouge peut être modifié. On peut imaginer d'autres choix de couleur, et d'autre choix de représentation comme de faire clignoter les éléments différents, ...

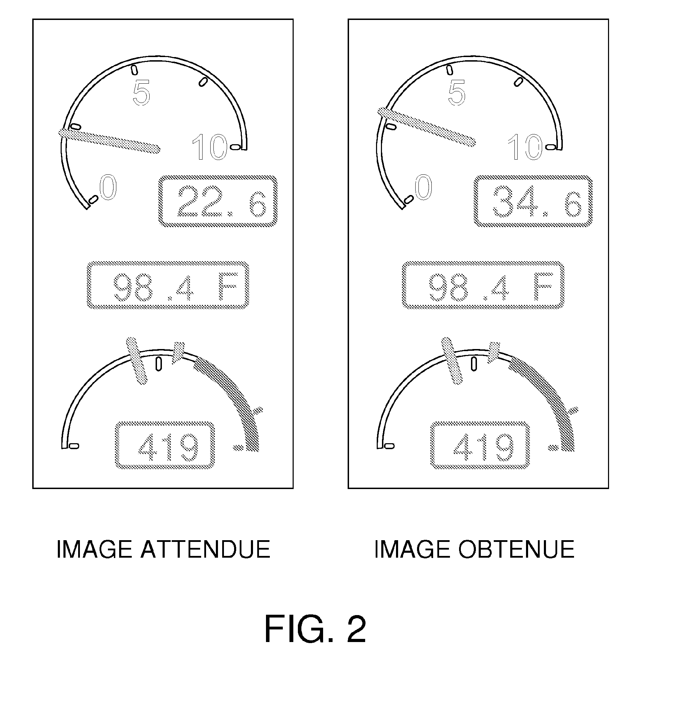

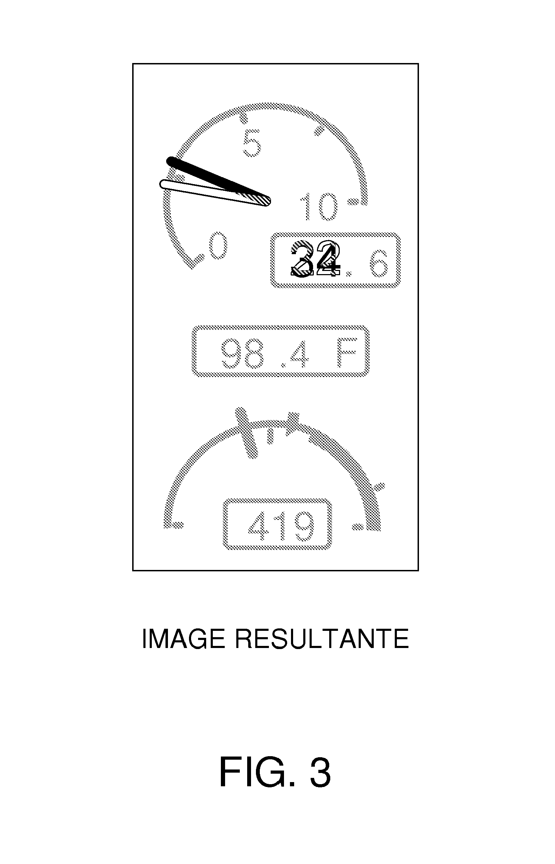

Les figures 2 et 3 illustrent le procédé de calcul de l'image résultante selon l'invention appliquée à une symbologie simplifiée comportant essentiellement deux cadrans en arc de cercle et des informations numériques. Ce type d'image est utilisé notamment en aéronautique pour les affichages des paramètres de l'aéronef.

Sur ces figures, afin de respecter les conventions en matière de présentations de figures de brevet, les conventions suivantes ont été adoptées :

Sur la figure 2 qui représente à gauche l'image attendue et à droite l'image obtenue, les parties colorées sont représentées en blanc ou en teinte de gris, le fond habituellement noir de l'écran n'est pas représenté.

Sur la figure 3 qui représente l'image résultante, les parties grises représentent les zones communes aux deux images ; les parties blanches les zones propres à l'image attendue, normalement ces zones sont de couleur verte ; les parties noires les zones propres à l'image obtenue, normalement ces zones sont de couleur rouge. Le fond habituellement noir n'est pas représenté. On constate, même si les contrastes sont atténués par la représentation en noir et blanc de la figure 3, qu'un observateur perçoit immédiatement dans l'image résultante les parties différentes entre l'image attendue et l'image obtenue, notamment les différences de valeurs des nombres et de position d'aiguille dans le cadran supérieur, ce qui est l'effet recherché.

Comme on peut le voir sur la figure 3, la création d'une image résultante permet la conservation et l'affichage de toutes les caractéristiques géométriques des symboles présents dans l'image obtenue (O), et dans l'image attendue (A). Les symboles communs aux deux images apparaissant en gris, les symboles différents apparaissant en couleur.

**Revendications**

1. Dispositif de détection d'anomalies dans une image numérique dite image obtenue (O), ladite image comportant des symboles géométriques ou alphanumériques, ledit dispositif comportant des moyens de mémorisation (10) de ladite image obtenue et d'une seconde image dite image attendue (A) et un dispositif de visualisation (2), les deux images étant composées de pixels colorés référencés dans un plan $\varphi(x, y)$, chaque pixel $P_O(x, y)$ de l'image obtenue ayant trois composantes rouge, verte et bleue notées respectivement $P_O(x, y, R)$, $P_O(x, y, G)$ et $P_O(x, y, B)$ et chaque pixel $P_A(x, y)$ de l'image attendue ayant également trois composantes rouge, verte et bleue notées respectivement $P_A(x, y, R)$, $P_A(x, y, G)$ et $P_A(x, y, B)$, pour tout pixel, la somme de ses trois composantes étant appelée luminance, les luminances étant notées $P_O(x, y, L)$ et $P_A(x, y, L)$ ,
   **caractérisé en ce que** ledit dispositif comporte des moyens de comparaison (11) des deux images obtenue et attendue, et des moyens de génération d'une troisième image dite image résultante, chaque pixel $P_R(x, y)$ de l'image résultante ayant trois composantes rouge, verte et bleue notées respectivement $P_R(x, y, R)$, $P_R(x, y, G)$ et $P_R(x, y, B)$ définies de la façon suivante :

   si les trois composantes d'un pixel $P_O(x, y)$ de l'image obtenue sont toutes identiques aux trois composantes du pixel $P_A(x, y)$ situé au même endroit de l'image attendue, alors les trois composantes du pixel $P_R(x, y)$ sont toutes égales et proportionnelles à la luminance $P_A(x, y, L)$ du pixel correspondant de l'image attendue ;
   si au moins une des trois composantes d'un pixel $P_O(x, y)$ de l'image obtenue est différente de la composante correspondante d'un pixel $P_A(x, y)$ situé au même endroit de l'image attendue, alors la composante rouge $P_R(x, y, R)$ du pixel $P_R(x, y)$ dépend de la luminance $P_O(x, y, L)$ du pixel correspondant de l'image obtenue, la composante verte $P_R(x, y, G)$ du pixel $P_R(x, y)$ dépend de la luminance $P_A(x, y, L)$ du pixel correspondant de l'image attendue, la composante bleue étant nulle.

2. Dispositif de détection d'anomalies dans une image numérique selon la revendication 1, **caractérisé en ce que,** lorsque les trois composantes d'un pixel $P_O(x, y)$ de l'image obtenue sont toutes identiques aux trois composantes du pixel $P_A(x, y)$, alors le facteur de proportionnalité est supérieur ou égal à 0 et inférieur à 1.

3. Dispositif de détection d'anomalies dans une image numérique selon la revendication 1, **caractérisé en ce que,** lorsque, au moins une des trois composantes d'un pixel $P_O(x, y)$ de l'image obtenue est différente de la composante correspondante d'un pixel $P_A(x, y)$ situé au même endroit de l'image attendue, alors :

   la composante rouge $P_R(x, y, R)$ du pixel $P_R(x, y)$ est proportionnelle à la luminance $P_O(x, y, L)$ du pixel correspondant de l'image obtenue, le facteur de proportionnalité étant supérieur à 1 tant que la valeur de ladite composante reste inférieure à sa valeur maximale pMax, la composante rouge $P_R(x, y, R)$ étant égale à sa valeur maximale pMax au-delà,
   la composante verte $P_R(x, y, G)$ du pixel $P_R(x, y)$ est proportionnelle à la luminance $P_A(x, y, L)$ du pixel correspondant de l'image attendue, le facteur de proportionnalité étant supérieur à 1 tant que la valeur de ladite composante reste inférieure à sa valeur maximale pMax, la composante verte $P_R(x, y, R)$ étant égale à sa valeur maximale pMax au-delà.

# FIG. 1

IMAGE ATTENDUE                    IMAGE OBTENUE

FIG. 2

IMAGE RESULTANTE

FIG. 3

Europäisches
Patentamt

European
Patent Office

Office européen
des brevets

# RAPPORT DE RECHERCHE EUROPEENNE

**Numéro de la demande**

EP 09 17 4226

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 10 2004 021047 B3 (KOENIG & BAUER AG [DE]) 6 octobre 2005 (2005-10-06) * alinéa [0099] - alinéa [0108]; figure 3 * ----- | 1-3 | INV. G06T5/50 G06T7/00 |
| A | CHRISTIAN DEMANT ET AL: "Industrielle Bildverarbeitung" 2002, SPRINGER , BERLIN, GERMANY , XP002529220 * page 169 - page 174 * ----- | 1-3 | |
| A | HÄTTICH ET AL: "PrintInspector: Ein System zur prozessfolgenden Druckbildkontrolle" VISIT, vol. 1, 1 janvier 2002 (2002-01-01), pages 4-5, XP009117204 * le document en entier * ----- | 1-3 | |
| A | "Neurocheck - Software für die industrielle Bildverarbeitung" BROCHURE NEUROCHECK,, [Online] 1 janvier 2003 (2003-01-01), pages 1-19, XP007908603 Extrait de l'Internet: URL:http://www.neurocheck.de/IMAGES/PDFs/Ncbrochure_g.pdf> * le document en entier * ----- | 1-3 | **DOMAINES TECHNIQUES RECHERCHES (IPC)** G06T |
| A | "Neurocheck Druckbildkontrolle - Anwendungsbeispiel Tankfüllstandsanzeige" BROCHURE NEUROCHECK,, [Online] 1 janvier 2003 (2003-01-01), page 1, XP007908604 Extrait de l'Internet: URL:http://www.neurocheck.de/IMAGES/PDFs/printqual_fuel_g.pdf> * le document en entier * ----- | 1-3 | |

Le présent rapport a été établi pour toutes les revendications

| Lieu de la recherche | Date d'achèvement de la recherche | Examinateur |
|---|---|---|
| Munich | 19 avril 2010 | Werling, Alexander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 4226

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-04-2010

| Document brevet cité au rapport de recherche | Date de publication | Membre(s) de la famille de brevet(s) | Date de publication |
|---|---|---|---|
| DE 102004021047 B3 | 06-10-2005 | EP 1741060 A2<br>WO 2005106792 A2 | 10-01-2007<br>10-11-2005 |

EPO FORM P0460

Pour tout renseignement concernant cette annexe : voir Journal Officiel de l'Office européen des brevets, No.12/82